# FASCICULE DE BREVET EUROPEEN

(11) **EP 2 661 576 B1**
(45) Date de publication et mention de la délivrance du brevet: **15.11.2017**
(21) Numéro de dépôt: 12701320.9
(22) Date de dépôt: 03.01.2012
(51) Int. Cl.: F16L 1/15, F16L 1/19, F16L 1/20, F16L 1/23, B66C 23/52, B66C 13/08, B66C 23/16

(54) **DISPOSITIF DE POSE D'UNE CONDUITE DANS UNE ETENDUE D'EAU, STRUCTURE ET PROCEDE ASSOCIES**
VORRICHTUNG ZUM VERLEGEN EINER ROHRLEITUNG IN EINER WASSERBEDECKTEN FLÄCHE UND DIESBEZÜGLICHE STRUKTUR UND VERFAHREN
DEVICE FOR LAYING A DUCT IN AN EXPANSE OF WATER, AND RELATED STRUCTURE AND METHOD

(30) Priorité: 04.01.2011 FR 1150045
(43) Date de publication de la demande: 13.11.2013
(73) Titulaire: Technip France, 92400 Courbevoix (FR)
(72) Inventeur: MALOBERTI, René, F-94500 Champigny sur Marne (FR); LEGEAY, Sébastien, F-76580 Le Trait (FR); BONNEMAISON, Didier, F-77090 Collegien (FR); THIBAULT, Yannick, F-76480 Duclair (FR)
(74) Mandataire: Lavoix
(86) Numéro de dépôt international: PCT/EP2012/050057
(87) Numéro de publication internationale: WO 2012/093122

(56) Documents cités:
- WO-A1-2004/040182
- WO-A1-2005/095835
- WO-A1-2009/134116
- WO-A2-03/060366

## Description

La présente invention concerne un dispositif de pose d'une conduite, avantageusement d'une conduite de transport de fluide, dans une étendue d'eau, selon le préambule de la revendication 1.

WO2009/134116, WO 2005/095835 et WO 03/060366 décrivent des dispositifs de pose selon le préambule de la revendication 1.

La conduite est notamment destinée à transporter des hydrocarbures recueillis dans le fond de l'étendue d'eau jusqu'à la surface de l'étendue d'eau.

La conduite est en particulier une conduite flexible stockée dans une structure flottante et déroulée dans l'étendue d'eau par l'intermédiaire du dispositif de pose. En variante, la conduite est une conduite rigide déroulée ou montée à partir de la structure de pose.

Dans tout ce qui suit, une conduite flexible est notamment une conduite telle que décrite dans les documents normatifs publiés par l'American Petroleum Institute (API), API 17J, et API RP17B, bien connus de l'homme du métier.

Cette définition englobe indifféremment les conduites flexibles de type non liées (« unbonded « en anglais), ou liées (« bonded » en anglais).

Plus généralement, et en variante, la conduite flexible est un faisceau composite de type « bundle », comprenant au moins un tube de transport de fluide et un ensemble de câbles électriques ou optiques propres à transporter une puissance électrique ou hydraulique ou une information entre le fond et la surface de l'étendue d'eau.

En variante encore, la conduite est un ombilical décrit dans les documents normatifs de l'American Petroelum Institute (API) API17E.

Pour déployer de telles conduites, il est connu de les dérouler à partir de moyens de stockage présents sur le navire. Les moyens de stockage sont notamment un panier ou un tambour rotatif.

Un dispositif de pose du type précité est par exemple décrit dans EP 2 005 050.

La conduite est déroulée à partir des moyens de stockage, puis est généralement remontée sur une goulotte portée par la tour du dispositif de pose.

Ensuite, la conduite est engagée dans des ensembles de saisie et de déplacement comprenant des tensionneurs à chenilles. La conduite descend ainsi verticalement ou de manière inclinée le long de la tour avant de plonger dans l'étendue d'eau.

La conduite est retenue par les moyens tensionneurs qui assurent sa suspension dans l'étendue d'eau. En outre, les moyens tensionneurs supportent la tension mécanique provenant du poids de la conduite déroulée et évitent aux moyens de stockage de subir ce poids, tout en garantissant que la conduite ne subit pas de flexion qui va au-delà de son rayon minimal de courbure en flexion sans endommagement («MBR» ou «Minimal Bending Radius» en anglais).

Pour plonger la conduite dans l'étendue d'eau, un puits vertical est généralement ménagé à travers la coque du navire pour former un passage de descente de la conduite. Un tel puits est désigné par le terme anglais «moon pool».

Plus généralement, la tour du dispositif de pose s'étend verticalement ou de manière inclinée au voisinage de ce puits pour permettre le déploiement de la conduite à travers le passage.

Dans EP 2 005 050, la tour est formée par un treillis ajouré supportant les ensembles de saisie et de déplacement de la conduite.

Un tel dispositif de pose ne donne pas entière satisfaction car il est limité en termes d'accessibilité et d'adaptabilité à différents environnements de travail.

En effet, ce dispositif est relativement encombrant sur le pont de la structure de pose. Il n'est donc pas possible de dégager un espace important sur le pont lorsque cela est nécessaire, par exemple pour stocker ou poser des éléments présentant un grand encombrement.

Dans certains cas, il pourrait être plus adéquat de poser la conduite en passant au-dessus d'un bord latéral de la structure, et non spécialement par un puits central ménagé dans la coque.

Un but de l'invention est donc d'obtenir un dispositif de pose d'une conduite dans une étendue d'eau qui présente une grande robustesse, tout en ayant une grande variété de configurations d'utilisation, pour permettre notamment le dégagement d'espace sur le pont du navire lorsque cela est nécessaire, ou la pose de conduites en passant au-dessus d'un bord latéral de la structure de pose.

A cet effet, l'invention a pour objet un dispositif selon la revendication 1.

Le dispositif selon l'invention peut comprendre l'une ou plusieurs des caractéristiques des revendications 1 à 13 ou l'une ou plusieurs des caractéristiques suivantes, prises isolément ou suivant toute combinaison techniquement possible, selon les revendications :
- le fût présente une surface périphérique sensiblement pleine ;
- la goulotte est montée rotative autour de l'axe de tour par rapport au fût.

L'invention a également pour objet une structure selon la revendication 14.

La structure de pose selon l'invention peut comprendre la caractéristique de la revendication 15 ou de la revendication 16.

L'invention a également pour objet un procédé selon la revendication 17.

L'invention sera mieux comprise à la lecture de la description qui va suivre, donnée uniquement à titre d'exemple, et faite en se référant aux dessins annexés, sur lesquels :
- la Figure 1 est une vue partielle de côté d'une première structure de pose flottante comprenant un dispositif de pose selon l'invention ;
- la Figure 2 est une vue de côté de la structure de la Figure 1 ;
- la Figure 3 est une vue partielle, prise en coupe suivant le plan III de la Figure 1 dans une configuration fermée de l'ensemble de saisie et de déplacement de la conduite ;
- la Figure 4 est une vue analogue à la Figure 3, dans une configuration ouverte de l'ensemble de saisie et de déplacement de la conduite ;
- la Figure 5 est une vue de dessus partielle de la structure de pose représentée sur la Figure 1, dans une première configuration de pose ;
- la Figure 6 est une vue analogue à la Figure 5, dans une deuxième configuration de pose ;
- la Figure 7 est une vue de dessus de l'ensemble de guidage du dispositif de pose représenté sur la Figure 1 ;
- la Figure 8 est une vue de dessus de l'appareil de manutention du dispositif de pose représenté sur la Figure 1 ;
- la Figure 9 est une vue schématique de l'appareil de manutention dans une première configuration d'utilisation pour abandonner une conduite flexible sur le fond de l'étendue d'eau ;
- la Figure 10 est une vue analogue à la Figure 9 dans une deuxième configuration d'utilisation dans laquelle l'appareil de manutention est utilisé comme grue de levage sur le navire ;
- la Figure 11 est une vue schématique en coupe de l'extrémité supérieure d'une variante de dispositif selon l'invention ;
- les Figures 12 et 13 sont des vues analogues aux Figures 1 et 2 d'une deuxième structure de pose selon l'invention ;

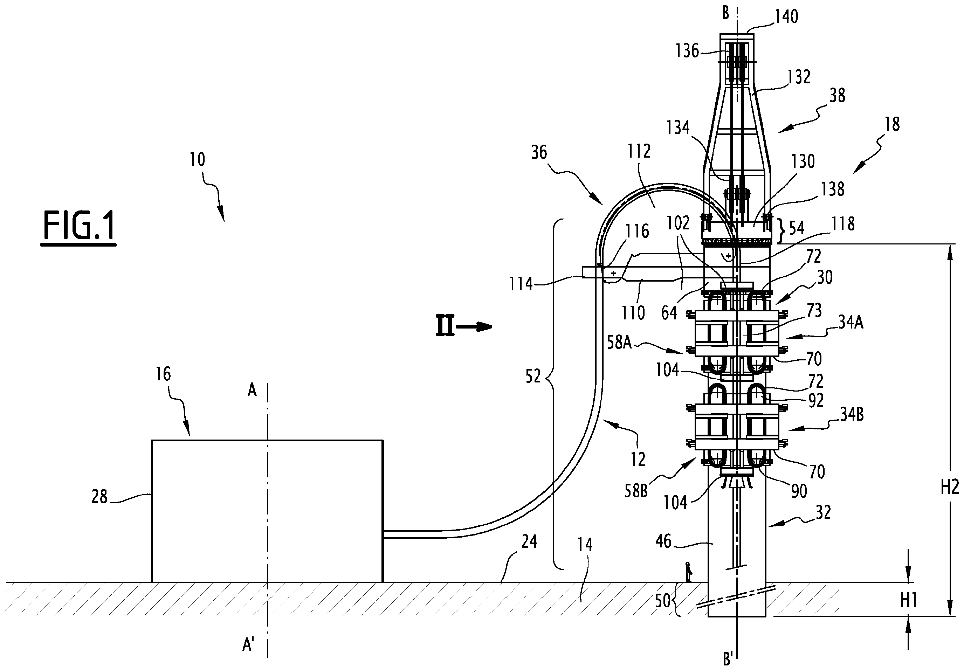

Une première structure de pose flottante 10 selon l'invention est représentée sur les Figures 1 à 10.

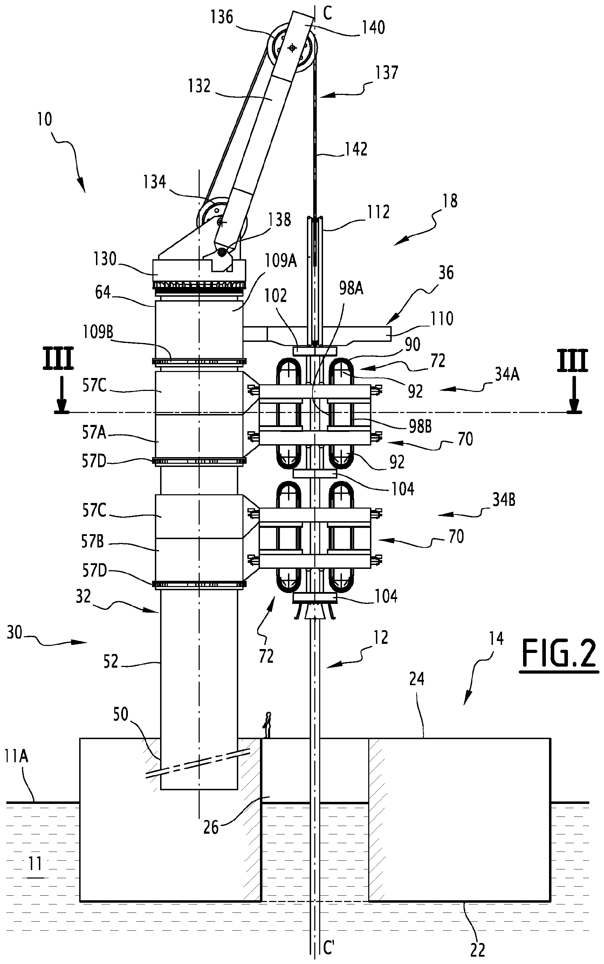

La structure 10 flotte sur une étendue d'eau 11 (visible sur la Figure 2) qui est par exemple une mer, un océan ou un lac. La profondeur de l'étendue d'eau 11 entre la surface 11A et le fond est supérieure à 5 mètres et notamment comprise entre 100 mètres et 4000 mètres.

La structure de pose 10 est destinée à la pose d'une conduite 12 qui est avantageusement une conduite flexible.

La conduite flexible est notamment une conduite telle que décrite dans les documents normatifs publiés par l'American Petroleum Institute (API), API 17J, et API RP17B. La conduite est en variante un ombilical tel que décrit dans les documents normatifs publiés par l'American Petroleum Institute (API), API17E ou bien encore une conduite rigide déroulée.

Cette définition englobe indifféremment les conduites flexibles de type non liées (« unbonded « en anglais), ou liées (« bonded » en anglais).

Plus généralement, et en variante, la conduite flexible est un faisceau composite de type « bundle » comprenant au moins un tube de transport de fluide et un ensemble de câbles électriques ou optiques propres à transporter une puissance électrique ou hydraulique ou une information entre le fond et la surface de l'étendue d'eau.

La conduite 12 peut porter des équipements, tels que des connecteurs ou des équipements de fond qui présentent une étendue transversale supérieure à son étendue transversale moyenne.

En référence à la Figure 1, la structure de pose 10 comporte une coque 14 flottant sur l'étendue d'eau 11, un ensemble 16 de stockage de la conduite 12 sur la coque 14 et un dispositif de pose 18 selon l'invention, monté sur la coque 14.

La coque 14 est par exemple la coque d'un navire comprenant des moyens de propulsion. En variante, la coque 14 est formée par une plateforme flottant sur l'étendue d'eau 11, une barge, ou une barge semi-submersible.

La coque 14 s'étend entre une surface inférieure 22 immergée sous l'étendue d'eau 11 et un pont supérieur 24, à partir duquel le dispositif de pose 18 fait saillie.

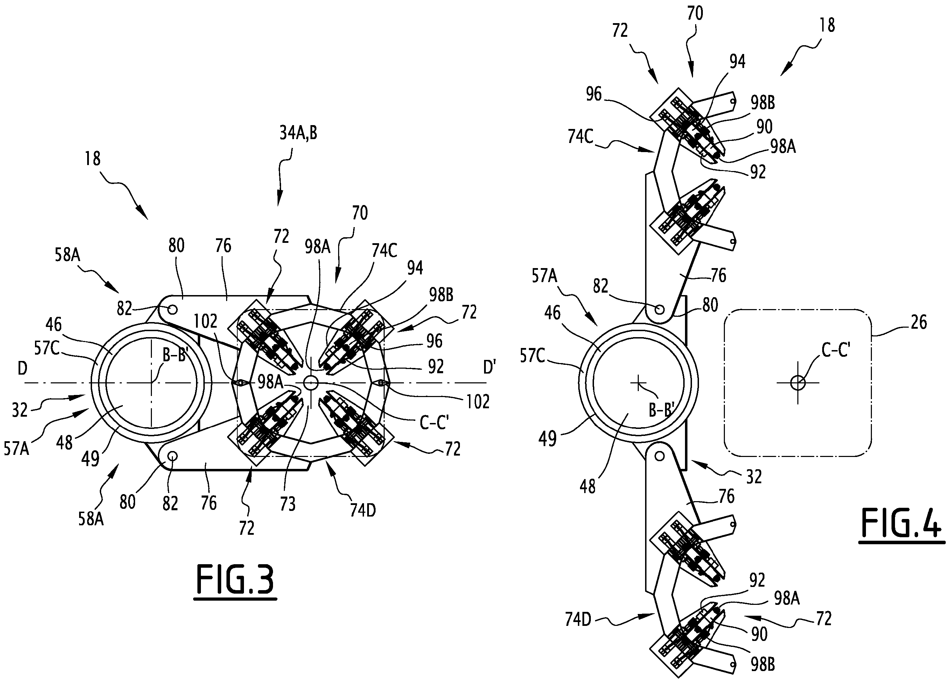

Le pont 24 est avantageusement situé au-dessus la surface 11A de l'étendue d'eau 11. Dans cet exemple, la coque 14 délimite intérieurement, entre la surface inférieure 22 et la surface supérieure 24, un puits traversant central 26, visible sur les Figures 2 et 3.

Le puits 26 est destiné à la pose de la conduite 12 dans une première configuration de pose.

Le puits central 26 s'étend verticalement. Il débouche vers le haut sur le pont 24 et il débouche vers le bas dans l'étendue d'eau 11 à travers la surface inférieure 22.

Dans cet exemple, le puits central 26 est situé sensiblement sur l'axe longitudinal du navire.

Lorsque la conduite 12 est une conduite flexible, l'ensemble de stockage 16 est formé par un organe rotatif 28 de stockage de la conduite dans une configuration enroulée. L'organe rotatif 28 est par exemple un tambour ou un panier.

L'ensemble de stockage 16 est disposé sur le pont 24 ou dans la coque 14.

La rotation de l'organe de stockage 28 dans un premier sens autour de son axe A-A' permet le déroulement d'une longueur croissante de conduite 12 vers le dispositif de pose 18, alors que la rotation dans un deuxième sens opposé au premier sens permet l'enroulement d'une longueur croissante de conduite sur l'organe de stockage 28.

Selon l'invention, le dispositif de pose 18 comporte une tour 30 formée d'un fût unique 32 ou « mono-fût » d'axe vertical B-B', définissant un axe de tour, et au moins un ensemble 34A, 34B de saisie et de déplacement de la conduite 12, porté par la tour 30.

Le dispositif de pose 18 comporte en outre un ensemble 36 de guidage du déplacement de la conduite 12 entre l'ensemble de stockage 16 et le ou chaque ensemble de saisie et de déplacement 34A, 34B. Le dispositif 18 comporte en outre avantageusement au moins un appareil de manutention 38 de charges, porté par la tour 30, distinct du ou de chaque ensemble de saisie et de déplacement 34A, 34B.

Comme on l'a vu plus haut, la tour 30 comprend un unique fût 32 vertical faisant saillie à partir du pont 24 le long de son axe B-B'.

Comme illustré par les Figures 3 et 4, le fût 32 est formé par une paroi tubulaire 46 délimitant un espace central 48 creux. La paroi tubulaire 46 délimite une surface périphérique pleine 49 qui obture totalement ou sensiblement totalement vers l'extérieur l'espace central 48. Ainsi, par exemple, plus de 90% de la surface extérieure découverte du fût 32 est obturée par la surface 49.

Dans l'exemple représenté sur les Figures 1 à 8, le fût 32 est de forme sensiblement cylindrique. Il présente une section transversale sensiblement circulaire.

Le fût 32 comporte une jambe unique et continue autour de l'axe B-B' de fixation sur le pont du navire, contrairement aux structures en treillis de l'art antérieur qui présentent deux jambes de fixation, communément dénommé «A frame» en langue anglaise.

Le fût 32 mono jambe peut présenter différentes formes, par exemple tubulaire, conique ou encore une base carrée et une partie supérieure cylindrique....

Comme illustré par la Figure 1, le fût 32, comporte une partie inférieure 50 engagée dans la coque 14, formant la jambe unique du fût 32 une partie intermédiaire 52 portant le ou chaque ensemble de saisie et de déplacement 34A, 34B et une partie supérieure 54 sur laquelle est montée l'appareil de manutention 38.

Dans cet exemple, le fût 32 est monté fixe en rotation dans la coque 14 par exemple par encastrement. En variante, l'encastrement mécanique du fût peut se faire en augmentant la raideur ou par tout au moyen connu de l'homme de l'art.

La partie intermédiaire 52 comporte, pour au moins un ensemble de saisie et de déplacement 34A, 34B, un manchon de pivotement 57A, 57B de chaque ensemble de saisie et de déplacement 34A, 34B, chaque manchon 57A, 57B portant avantageusement un support latéral 58A, 58B situé de part et d'autre de l'axe B-B' à une hauteur donnée au dessus du pont 24.

Chaque manchon de pivotement 57A, 57B comporte une bague engagée autour de la surface extérieure du fût 32. La bague 57C est retenue en translation le long de l'axe B-B' du fût 32 à l'encontre de son poids par une butée inférieure 57D.

Ainsi, le manchon 57A, 57B est déplaçable en rotation autour de l'axe B-B' par rapport au fût 32 pour déplacer l'ensemble de saisie et de déplacement 34A, 34B qu'il porte en rotation autour de l'axe B-B', au moins entre une première configuration de pose et une deuxième configuration de pose, qui seront décrites en détail plus bas.

Chaque support 58A, 58B comporte dans cet exemple une saillie centrale 60 et deux plaques de retenue et de guidage 62A, 62B situées respectivement au-dessus et en-dessous de la saillie 60.

Chaque support 58A, 58B étant monté sur un manchon 57A, 57B, il est déplaçable en rotation autour de l'axe B-B' conjointement avec le manchon 57A, 57B.

La partie intermédiaire 52 comporte en outre, au-dessus des manchons 57A, 57B, un support additionnel 64 de retenue de l'ensemble de guidage 36.

Dans l'exemple représenté sur la Figure 2, la tour 30 porte deux ensembles de saisie et de déplacement 34A, 34B espacés longitudinalement le long de l'axe B-B'.

Chaque ensemble 34A, 34B comporte un châssis 70 de support et au moins deux mécanismes de saisie. Les mécanismes de saisie sont des tensionneurs à chenilles 72 portés par le châssis 70.

Comme on le verra plus bas, chaque châssis 70 est propre à être déplacé entre une configuration ouverte et une configuration fermée d'utilisation qui seront décrites plus bas.

Dans la configuration fermée, chaque châssis 70 délimite un passage central 73 s'étendant verticalement le long d'un axe C-C' définissant un axe de pose de la conduite 12. Cet axe de pose C-C' est sensiblement parallèle à l'axe B-B' de la tour 30, c'est-à-dire totalement parallèle ou incliné d'un angle inférieur par exemple à 10° par rapport à l'axe B-B'.

En référence aux Figures 3 et 4, chaque châssis 70 comporte deux demi-cadres 74C, 74D rotatifs. Chaque demi-cadre 74C, 74D est raccordé à un support 58A, 58B respectif par l'intermédiaire d'un bras 76 de liaison.

Dans l'exemple représenté sur les Figures 3 et 4, chaque demi-cadre 74C, 74D présente, en projection dans un plan horizontal, une forme de coque en U s'ouvrant vers la coque en U du demi-cadre 74D, 74C opposé.

Chaque demi-cadre 74C, 74D porte avantageusement deux tensionneurs 72 disposés sensiblement perpendiculairement l'un par rapport à l'autre.

Chaque bras de liaison 76 fait saillie vers le fût 32 à partir d'une surface arrière d'un demi-cadre 74C, 74D, jusqu'à une extrémité libre 80 destinée à être montée de manière rotative dans un support 58A, 58B par l'intermédiaire d'un pivot 82. Le pivot 82 s'étend parallèlement à l'axe B-B'.

Dans l'exemple représenté sur les Figures, chaque demi-cadre 74C, 74D est muni de deux bras 76 parallèles décalés longitudinalement le long de l'axe B-B'.

Chaque bras 76 est guidé horizontalement par un support 58A, 58B pour maintenir le déplacement du bras 76 et du demi-cadre 74C, 74D suivant un plan sensiblement horizontal, perpendiculaire à l'axe de rotation défini par le pivot 82. Chaque extrémité 80 d'un bras 76 repose en appui entre une plaque 62A et la saillie 60.

Chaque tensionneur 72 fait saillie dans le passage 73 vers l'axe C-C'.

Le tensionneur 72 comporte une chenille 90 de guidage destinée à saisir et déplacer la conduite 12, deux rouleaux 92, sur lesquels sont enroulés la chenille 90, un dispositif 94 d'entraînement de la chenille 90 le long de l'axe B-B', et un mécanisme 96 de déplacement radial de chaque chenille 90 vers l'axe B-B'.

La chenille 90 présente sensiblement une forme de bande sans fin enroulée sur deux rouleaux 92. Elle présente ainsi une partie longitudinale 98A de guidage de la conduite et une partie longitudinale 98B de retour, destinées à s'étendre parallèlement à l'axe C-C' de pose.

La partie de guidage 98A est destinée à entrer en contact avec la surface périphérique extérieure de la conduite 12, le long d'une génératrice.

Les rouleaux 92 sont mobiles en rotation autour d'un axe perpendiculaire à l'axe C-C'. Ils sont entraînés en rotation autour de leur axe par le dispositif 94, pour entraîner le déplacement des parties 98A, 98B parallèlement à l'axe C-C'.

Le mécanisme de déplacement radial 96 comporte par exemple au moins un vérin propre à déplacer radialement chaque chenille 90 à l'écart du demi-cadre 74C, 74D vers l'axe de pose C-C', afin d'appliquer une force déterminée sur la surface périphérique extérieure de la conduite 12.

En référence aux Figures 3 et 4, chaque châssis 70 est déplaçable entre une configuration ouverte représentée sur la Figure 4 et une configuration fermée représentée sur la Figure 3.

Dans la configuration fermée représentée sur la Figure 3, les demi-cadres 74C, 74D opposés sont disposés au contact l'un de l'autre. Ils forment ainsi un cadre de section fermée délimitant le passage central 73, dans lequel font saillie les tensionneurs 72.

Le passage 73 débouche vers le haut et vers le bas suivant l'axe C-C'.

Dans cette configuration, les bras 76 s'étendent avantageusement parallèlement l'un à l'autre, le long d'un axe D-D' perpendiculaire à l'axe C-C'.

Les demi-cadres 74C, 74D sont au contact l'un de l'autre au niveau de leurs extrémités libres 102. Des moyens de retenue peuvent être engagés entre les demi-cadres 74C, 74D pour les maintenir en configuration fermée.

Dans cette configuration, chaque tensionneur 72 d'un demi-cadre 74C, 74D s'étend en regard d'un tensionneur 72 porté par un demi-cadre opposé 74D, 74C de part et d'autre de l'axe C-C' de pose.

Ainsi, les sections de guidage 98A opposées de deux tensionneurs 72 en regard se font face et sont propres à saisir respectivement deux sections angulaires opposées de la conduite 12 par rapport à l'axe C-C'.

Dans la configuration ouverte, chaque demi-cadre 74C, 74D a été éloigné du demi-cadre 74D, 74C opposé, par pivotement autour du pivot vertical 80.

Dans l'exemple représenté sur la Figure 4, les demi-cadres 74C, 74D ont été pivotés d'au moins 60°, avantageusement de 90°, pour dégager l'espace occupé par les demi-cadres 74C, 74D autour de l'axe de pose C-C' lorsque les demi-cadres 74C, 74D sont refermés l'un sur l'autre. Le châssis 70 est ainsi ouvert longitudinalement.

Comme on le verra plus bas, une telle configuration permet le passage d'objets de grandes tailles le long de l'axe de pose C-C', notamment lorsque de tels objets doivent être descendus en étant montés sur la conduite 12.

Dans une variante représentée sur les Figures 1 et 2, le châssis 70 de l'ensemble 34A comporte en outre un organe amont de pré-guidage 102 de la conduite 12 disposé au-dessus des chenilles 90 coaxialement avec l'axe C-C', et un organe aval de guidage 104 de la sortie de la conduite 12 disposé coaxialement avec l'axe C-C' au-dessous des chenilles 90.

Ces organes 102, 104 permettent d'orienter la conduite 12 lorsqu'elle passe entre les chenilles 90 des tensionneurs 72.

Un organe aval de guidage 104 est monté sur l'ensemble inférieur 34B de saisie et de déplacement situé juste au-dessus du puits central 26. Cet organe 104 garantit un rayon de courbure adéquat et centré pour la sortie de la conduite 12 avant son passage dans le puits central 26.

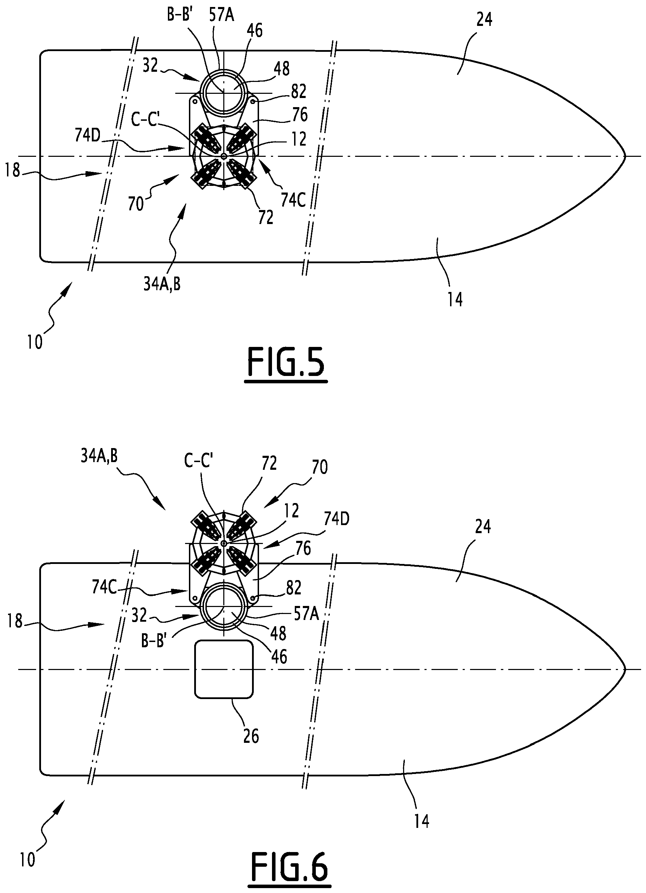

Comme on le verra plus bas, chaque ensemble de saisie et de déplacement 34A, 34B est déplaçable angulairement autour de l'axe de tour B-B' par rapport au pont 24, entre une première configuration de pose, représentée sur la Figure 5, dans laquelle l'axe de pose C-C' est situé en regard du puits central 26 et une deuxième configuration de pose, représentée sur la Figure 6, dans laquelle l'axe de pose C-C' est situé au-delà du bord latéral de la structure de pose 10. Le déplacement angulaire de chaque ensemble de saisie et de déplacement 34A, 34B entre ses deux configurations de pose est supérieur à 90° et est notamment égal à 180°.

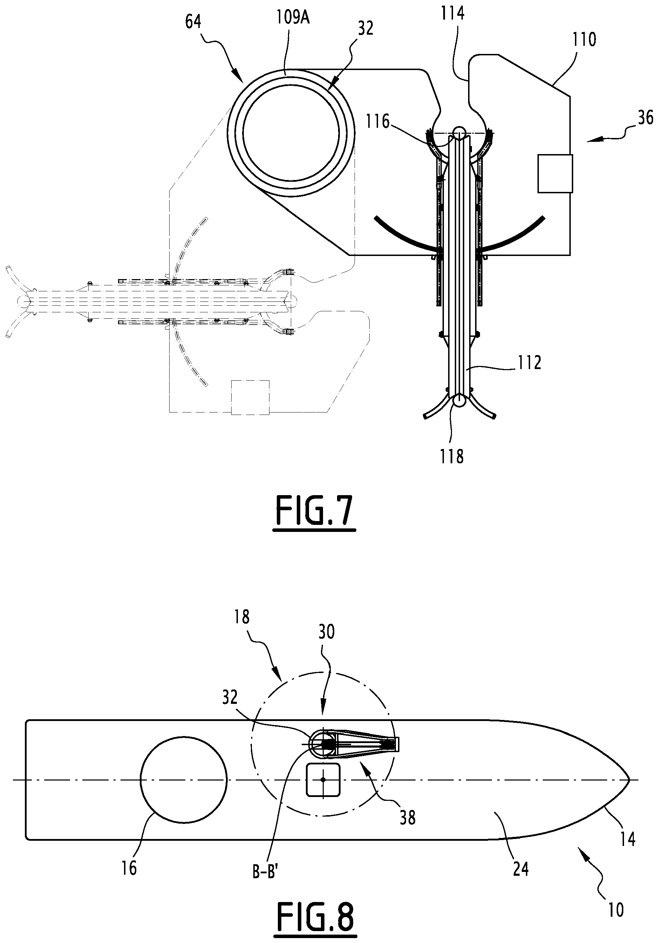

Comme illustré par les Figures 1 et 7, chaque support additionnel 64 est formé par une bague 109A monté pivotante autour de l'axe B-B' autour du fût 32.

Chaque bague 109A est retenue en translation le long de l'axe B-B' à l'encontre de son poids par une butée axiale 109B, visible sur la Figure 1.

En référence aux Figures 1 et 7, l'ensemble de guidage 34 comporte un plateau de support 110 rotatif monté sur le support additionnel 64 et une goulotte 112 de guidage portée par le plateau 110.

Le plateau 110 est monté rotatif conjointement avec le support additionnel autour de l'axe B-B' au voisinage de la partie supérieure 54 de la tour 30, au-dessus 64 des ensembles 34A, 34B, par l'intermédiaire de la butée de retenue 64.

Le plateau 110 définit, dans cet exemple, une encoche 114 de passage amont de la conduite 12.

La goulotte 112 présente sensiblement une forme de U tournée vers le bas définissant un rayon de courbure adéquat pour la conduite 12. Ce rayon de courbure est supérieur au MBR de la conduite 12.

La goulotte 112 présente une extrémité amont 116 disposée en regard de l'encoche 114 et une extrémité aval 118 destinée à être placée en regard de l'axe de pose C-C', au-dessus d'un ensemble 34A, 34B de saisie et de déplacement.

La goulotte 112 fait saillie au-dessus du plateau 110. Son extrémité libre 118 dépasse à l'écart du plateau 110.

Comme illustré par les Figures 1, 2 et 8 à 10, l'appareil de manutention 38 porté par la tour 30 comporte une base rotative 130, une flèche pivotante 132 montée sur la base 130, et des poulies de renvoi 134, 136 portées respectivement par la base 130 et par la flèche 132 .

L'appareil de manutention 18 comprend en outre au moins un treuil (non visible) sur lequel est enroulé une ligne de déploiement 137.

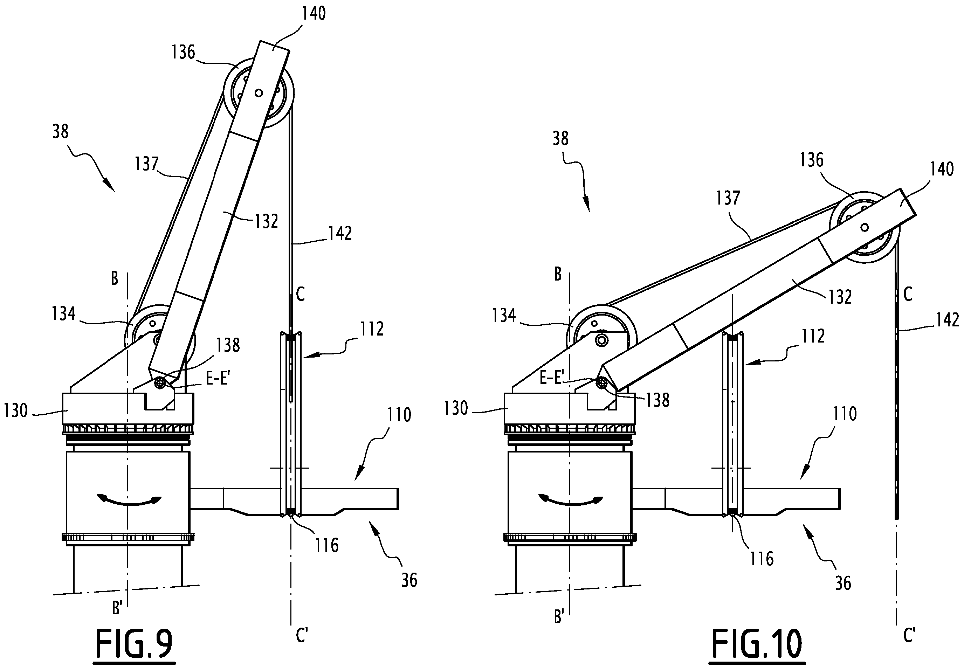

Comme illustré par les Figures 9 et 10, la base 130 forme un chapeau monté rotatif sur la partie supérieure 54 du fût 32, autour de l'axe B-B'.

La base 130 est ainsi rotative autour de l'axe B-B' sur au moins 360°. La base 130 porte la poulie amont 134.

La flèche 132 présente une première extrémité 138 articulée sur la base rotative 130, autour d'un axe E-E' sensiblement horizontal et une extrémité libre 140.

La deuxième poulie 136 est montée rotative sur la flèche 132, avantageusement au voisinage de l'extrémité libre 140.

Ainsi, lors de la rotation de la base 130 autour de l'axe B-B' par rapport au fût 32, la flèche 132 est rotative autour de l'axe B-B' conjointement avec la base 130.

La flèche 132 est en outre montée pivotante sur la base 130 autour de l'axe horizontal E-E' entre une position rapprochée de l'axe de tour B-B' représentée sur la Figure 9, et une position éloignée de l'axe de tour B-B', représentée sur la Figure 10.

La ligne 137 est déployable par rapport au treuil, et est rétractable sur le treuil. La ligne 137 est engagée sur les poulies 134, 136. Elle présente en aval de la poulie 134, un tronçon vertical 142 qui peut descendre le long de l'axe de pose C-C' ou parallèlement à celui-ci.

La ligne 137 est par exemple un câble d'abandon et de récupération, désigné par le terme anglais « Abandonment and Recovery System » ou « A & R System ».

Le fonctionnement du dispositif de pose 18 lors du déploiement d'une conduite flexible 12 dans l'étendue d'eau 11 va maintenant être décrit.

Initialement, la conduite flexible 12 est stockée dans l'ensemble de stockage 16 en étant enroulée sur l'organe rotatif 28.

La conduite 12 conserve ainsi un rayon de courbure adéquat supérieur à son MBR.

La structure flottante 10 est alors déplacée sur l'étendue d'eau 11 jusqu'à une région de pose dans laquelle la conduite 12 doit être déployée.

Dans une première configuration de pose, illustrée par la Figure 5, la conduite 12 est déployée à travers le puits central 26. Les manchons 57A, 57B sont alors disposés angulairement pour que chaque châssis 70 dans sa configuration fermée soit placé en regard du puits central 26, avec l'axe de pose C-C' passant par le puits central 26.

A cet effet, si cela est nécessaire, chaque manchon 57A, 57B est entraîné en rotation autour de l'axe B-B' par rapport au fût 32.

Ensuite, les châssis 70 respectifs des ensembles de saisie et de déplacement 34A, 34B sont ouverts au moins partiellement.

Une extrémité de la conduite 12 est alors saisie par une ligne de travail 137 de l'appareil de manutention 38 et est amenée au contact de la goulotte 112 en l'engageant sur celle-ci.

Puis, un tronçon de conduite 12 est déployé successivement sur la goulotte 112 entre l'extrémité amont 116 extrémité aval 118, puis est descendu entre les demi-cadres 74C, 74D opposés de chaque châssis 70 pour s'étendre verticalement le long de l'axe C-C'.

Ensuite, les châssis 70 sont passés dans leur position fermée. A cet effet, les demi-cadres 74C, 74D sont déplacés l'un vers l'autre en les faisant pivoter autour des supports 58A, 58B, puis sont éventuellement verrouillés l'un sur l'autre, comme cela a été décrit plus haut.

Les mécanismes 96 de déplacement radial des chenilles 90 sont alors activés pour appliquer chaque partie longitudinale de guidage 98A de chenille 90 contre la surface périphérique extérieure de la conduite 12 suivant une génératrice de celle-ci.

Les mécanismes de déplacement radial 96 sont par ailleurs pilotés pour appliquer une pression prédéterminée sur la conduite 12.

Puis, le dispositif 94 d'entraînement en rotation des rouleaux 92 est activé. Les chenilles 90 sont alors entraînées en mouvement, de sorte que chaque partie longitudinale 98A se déplace de haut en bas en entrainant la conduite 12. La conduite 12 est ainsi entraînée en translation le long de l'axe de pose C-C' par les chenilles 90 des tensionneurs 72 en regard de chaque ensemble 34A, 34B.

Une longueur croissante de conduite 12 peut ainsi être déployée, avec une tension contrôlée, par l'intermédiaire des ensembles de saisie et de guidage 34A, 34B.

Par ailleurs, grâce à la structure robuste de la tour 30 conférée par le fût 32 monobloc, et par la fixation des châssis 70 sur le fût monobloc 32, la tour 30 retient la conduite 12 de manière contrôlée lors de son déploiement, même lorsque la longueur de conduite 12 déployée est très élevée, par exemple supérieure à 1000 mètres.

Dans certains cas, un équipement présentant une étendue radiale supérieure à celle de la conduite 12 et/ou supérieure à celle du passage 73 doit être descendu dans l'étendue d'eau 11 en étant monté sur la conduite 12. Un tel équipement est par exemple un connecteur ou un accessoire. Dans ce cas, l'appareil de manutention 38 est manoeuvré en rotation pour placer la ligne 137 en regard de l'axe de pose C-C'.

La ligne 137 est alors fixée sur l'équipement et l'extrémité supérieure de la conduite 12 est montée sous l'équipement.

Puis, les châssis 70 sont ouverts pour éloigner les demi-cadres 74C, 74D de l'axe de pose C-C' et dégager ainsi le passage pour l'équipement à descendre. La ligne 137 porte alors l'équipement et la conduite 12.

La ligne 137 est alors relâchée pour permettre la descente de l'équipement dans l'étendue d'eau.

Puis, lorsqu'un autre tronçon de conduite 12 doit être descendu, les châssis 70 peuvent être refermés pour permettre la saisie de la conduite 12 entre des tensionneurs opposés 72.

Lorsque la conduite 12 est descendue par les ensembles 34A, 34B, l'appareil de manutention 18 comportant une base 130 rotative, il peut être utilisé de manière indépendante de la descente de la conduite 12 pour effectuer des tâches sur des zones de la structure flottante 10 qui sont décalées angulairement par rapport à l'axe de pose C-C'.

Dans une deuxième configuration de pose, illustrée par la Figure 6, la conduite 12 est descendue dans l'étendue d'eau 11 en la faisant passer au-dessus d'un bord latéral de la structure flottante 10.

Chaque manchon 57A, 57B alors pivoté autour de l'axe B-B' pour amener chaque châssis 70 d'un ensemble de saisie et de déplacement 34A, 34B en regard de l'étendue d'eau, à l'écart latéralement du bord latéral de la structure 10. Ainsi, comme illustré sur la figure 6, les ensembles de saisie 34A, 34B et de guidage font saillie au-delà du bord latéral de la structure flottante 10.

L'ensemble de guidage 36 est par ailleurs pivoté pour assurer un déploiement adéquat de la conduite 12 depuis l'ensemble de stockage 16 vers l'axe de pose C-C'.

L'axe de pose C-C' est alors situé en regard de l'étendue d'eau, au-delà du bord latéral de la structure flottante 10.

Puis, les opérations décrites précédemment pour la descente de la conduite 12 sont effectuées de manière analogue.

Dans une variante, le dispositif de pose 18 est utilisé pour remonter une conduite flexible 12 immergée dans l'étendue d'eau à la surface, et l'enrouler dans un ensemble de stockage 16 présent dans le navire.

Dans ce cas, les chenilles 90 des tensionneurs 72 sont activées pour que la section longitudinale 98A se déplace de bas en haut et permette la traction de la conduite 12.

Plus généralement, la possibilité de déplacer angulairement l'axe de pose C-C' défini par chaque châssis 70 autour de l'axe B-B' du fût 32 de la tour 30 permet de placer le dispositif de pose 18 dans une grande variété de configurations, notamment pour descendre la conduite à travers un puits central 26, lorsque ce puits est présent, ou alternativement pour descendre la conduite 12 en la faisant passer au-dessus d'un bord latéral de la structure flottante 10. Il est en outre possible de pivoter le fût 32 autour de l'axe B-B' pour dégager un espace de travail sur le pont supérieur 24 en déplaçant le ou chaque ensemble 34A, 34B à l'écart angulairement de cet espace de travail.

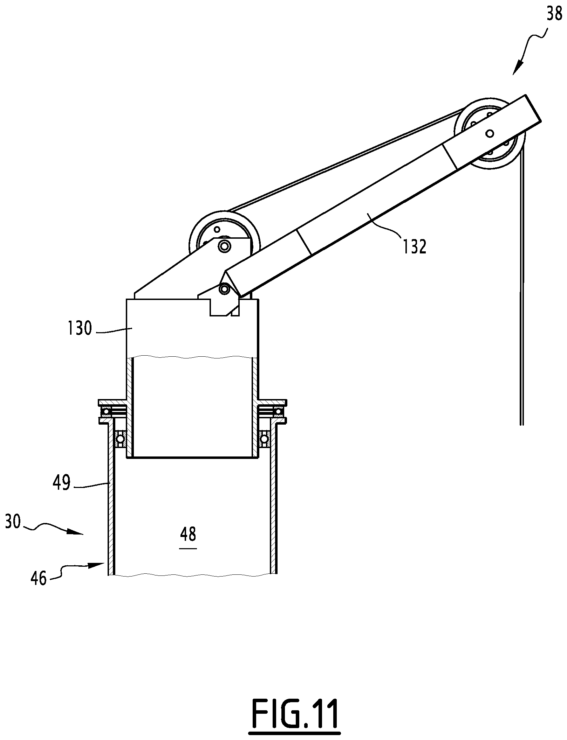

Dans une variante représentée schématiquement sur la Figure 11, l'appareil de manutention 38 est escamotable. A cet effet, il est monté par engagement réversible à l'extrémité supérieure du fût 32. Des roulements assurant la rotation de l'appareil de manutention 38 sont interposés entre la base 130 et le fût 32.

L'appareil de manutention 38 peut ainsi être extrait de l'extrémité supérieure pour être placé sur le pont 34 et réduire ainsi la hauteur de la tour 30 lorsque cela est nécessaire, par exemple pour passer sous un pont.

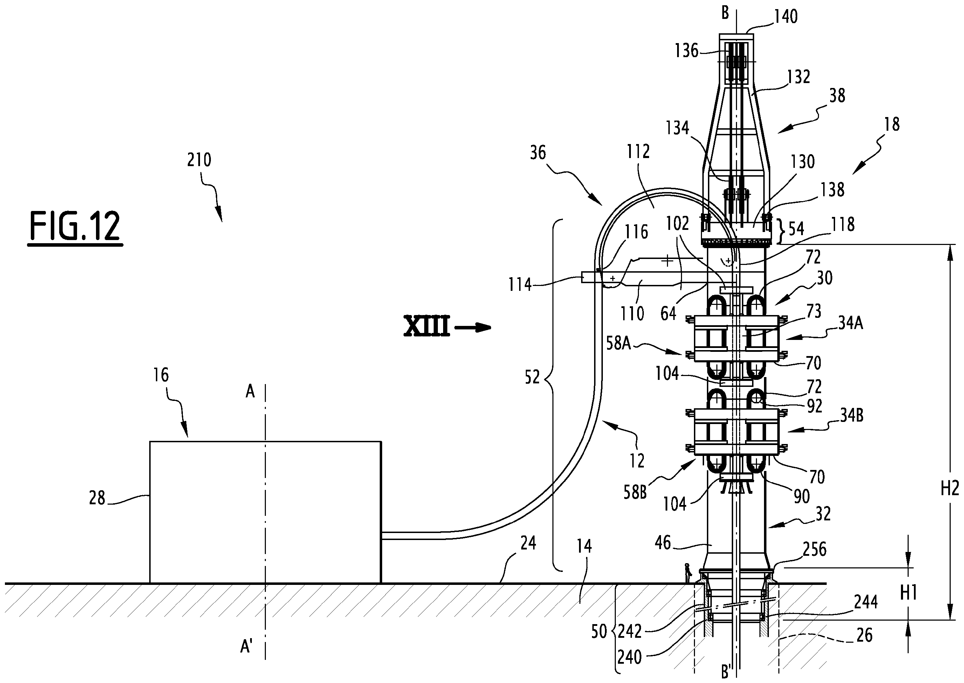

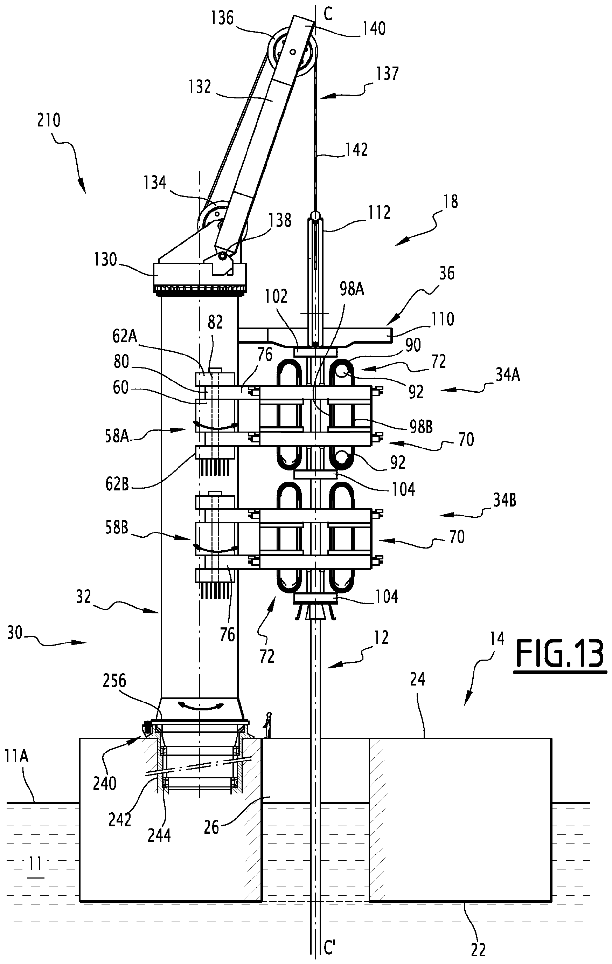

Une deuxième structure flottante 210 selon l'invention est illustrée par les Figures 12 et 13.

Dans cette structure 210, le fût 32 de la tour 30 est disposé dans un support 240 fixé sur la coque 14 pour retenir le fût 32 et permettre son guidage en rotation autour de son axe B-B'.

Le support 240 est par exemple formé par une chemise cylindrique 242 insérée dans la coque 14 à travers le pont supérieur 24 et soudée dans la coque 14. Le support 240 comporte une pluralité de paliers 244 destinés à être interposés entre la chemise 242 et le fût 32 pour autoriser la rotation du fût 32 dans le support 240.

Le support 240 présente une hauteur H1, prise le long de l'axe B-B', inférieure à la hauteur H2 du fût 32, prise le long de l'axe B-B'.

En variante, le support 240 est délimité dans la coque 14.

Dans l'exemple illustré par la Figure 1, la partie intermédiaire 52 présente à sa base une collerette d'appui 256 destinée à s'appuyer sur le support 240 pour bloquer le fût 32 en position le long de l'axe B-B'.

Dans cet exemple, les supports 58A, 58B sont montés solidaires du fût 32. La tour 30 est ainsi dépourvue de manchons de pivotement 57A, 57B.

Ainsi, la rotation des ensembles de saisie et de déplacement 34A, 34B autour de l'axe de tour B-B' entre la première configuration de pose et la deuxième configuration de pose est assurée par la rotation du fût 32 autour du support 240.

A cet égard, pour placer chaque ensemble de saisie et de déplacement 34A, 34B dans la première configuration de pose, le fût 32 de la tour est pivoté pour que chaque châssis 70 dans sa configuration fermée soit placé en regard du puits central 26, avec l'axe de pose C-C' passant par le puits central 26.

De même, pour passer chaque ensemble de saisie et de déplacement 34A, 34B dans la deuxième configuration de pose décrite plus haute, le fût 32 de la tour 30 est pivoté autour de l'axe B-B' par rapport au support 240 pour amener chaque châssis 70 en regard de l'étendue d'eau, à l'état latéralement du bord latéral de la structure 10.

Dans une variante de ce dernier dispositif, les supports 58A, 58B sont montés sur des manchons rotatifs 57A, 57B, comme pour les modes de réalisation des Figures 1 et 2.

Dans une autre variante de chacun des dispositifs 10, 210, la tour 30 peut être utilisée pour descendre une conduite 12 rigide ou semi-rigide.

Dans ce cas, les ensembles 34A, 34B peuvent comprendre des tensionneurs 72 comme décrit précédemment. En variante, au moins un des ensembles 34A, 34B de saisie ou de guidage est monté mobile en translation le long de l'axe B-B' du fût 32.

Dans un mode de réalisation, les ensembles 34A, 34B comprennent des organes de retenue formant des mâchoires de serrage ou des blocs d'appui pour saisir des tronçons de conduite rigide, comme décrit par exemple dans la demande de brevet WO 99/35429 de la Demanderesse.

## Revendications

1. Dispositif (18) de pose d'une conduite (12) dans une étendue d'eau (11), du type comprenant :
- une tour (30) destinée à faire saillie suivant un axe de tour (B-B') dans une structure de pose flottante (10) ;
- au moins un ensemble (34A, 34B) de saisie et de déplacement de la conduite (12) destiné à entrer en contact avec une surface périphérique de la conduite (12) pour guider le déplacement de la conduite (12) vers l'étendue d'eau (11) suivant un axe de pose (C-C') sensiblement parallèle à l'axe de tour (B-B'), le ou chaque ensemble de saisie et de déplacement (34A, 34B) étant porté par la tour (30) ; **caractérisé en ce que** la tour (30) est formée par un fût (32) s'étendant le long de l'axe de tour (B-B'), le ou chaque ensemble de saisie et de déplacement (34A, 34B) faisant saillie transversalement à partir du fût (32) par rapport à l'axe de tour (B-B'), le fût (32) étant formé par une paroi tubulaire (46) délimitant un espace central (48) creux.

2. Dispositif (18) selon la revendication 1, **caractérisé en ce que** le fût (32) comporte une jambe unique de fixation dans la structure flottante, le fût présentant avantageusement une surface périphérique sensiblement pleine.

3. Dispositif (18) selon l'une quelconque des revendications précédentes, **caractérisé en ce que** le ou chaque ensemble de saisie et de déplacement (34A, 34B) est déplaçable angulairement autour de l'axe de tour (B-B') entre une première configuration de pose et une deuxième configuration de pose.

4. Dispositif (18) selon la revendication 3, **caractérisé en ce que** le ou chaque ensemble de saisie et de déplacement (34A, 34B) est monté rotatif par rapport au fût (32) pour déplacer le ou chaque ensemble de saisie et de déplacement (34A, 34B) entre sa première configuration de pose et sa deuxième configuration de pose.

5. Dispositif (18) selon la revendication 3 ou 4 **caractérisé en ce qu'**il comporte un support (240) destiné à être fixé sur la structure de pose flottante (10), le fût (32) étant monté rotatif dans le support (240) autour de l'axe de tour (B-B') pour déplacer le ou chaque ensemble de saisie et de déplacement (34A, 34B) entre sa première configuration de pose et sa deuxième configuration de pose.

6. Dispositif (18) selon l'une quelconque des revendications précédentes, **caractérisé en ce qu'**il comporte une goulotte de guidage (112) de la conduite vers le ou chaque ensemble de saisie et de déplacement (34A, 34B), la goulotte de guidage (112) étant portée par la tour (30), en étant avantageusement disposée au-dessus du ou de chaque ensemble de saisie et de déplacement (34A, 34B).

7. Dispositif (18) selon l'une quelconque des revendications précédentes, **caractérisé en ce qu'**il comporte un appareil (38) de manutention distinct du ou de chaque ensemble de saisie et de déplacement (34A, 34B), l'appareil de manutention (38) étant porté par la tour (30).

8. Dispositif (18) selon la revendication 7, **caractérisé en ce que** l'appareil de manutention (38) est monté à une extrémité supérieure du fût (32).

9. Dispositif (18) selon l'une quelconque des revendications 7 ou 8, **caractérisé en ce que** l'appareil de manutention (38) est monté rotatif par rapport au fût (32).

10. Dispositif (18) selon l'une quelconque des revendications 7 à 9, **caractérisé en ce que** l'appareil de manutention (38) comprend un treuil et une ligne déployable (137) à partir du treuil, la ligne déployable (137) étant apte à porter la conduite (12)

11. Dispositif (18) selon l'une quelconque des revendications précédentes, **caractérisé en ce que** le ou chaque ensemble de saisie et de déplacement (34A, 34B) comporte un châssis (70) définissant un passage de circulation (73) de la conduite suivant un axe de pose (C-C') parallèle à l'axe de tour (B-B'), et au moins un mécanisme de saisie d'une surface périphérique de la conduite, le mécanisme de saisie étant porté par le châssis (70).

12. Dispositif (18) selon la revendication 11, **caractérisé en ce que** le châssis (70) est déplaçable entre une configuration fermée de pose et une configuration ouverte d'accès au passage de circulation (73), le châssis (70) comprenant avantageusement deux structures de support (74C, 74D) opposées, chaque structure de support (74C, 74D) portant un mécanisme de saisie destiné à entrer en contact avec la conduite, au moins une structure de support (74C, 74D), avantageusement les deux structures de support (74C, 74D), étant montées rotatives par rapport au fût (32) pour faire passer le châssis (70) de sa configuration fermée à sa configuration ouverte.

13. Dispositif (18) selon l'une quelconque des revendications 11 ou 12, **caractérisé en ce que** le mécanisme de saisie comprend un tensionneur à chenilles (72).

14. Structure (10 ; 210) de pose flottante, destinée à la pose d'une conduite (12) dans une étendue d'eau (11), du type comprenant :
- un pont (24);
- un dispositif de pose (18) selon l'une quelconque des revendications précédentes, le dispositif de pose (18) faisant saillie sur le pont (24),
le ou chaque ensemble de saisie et de déplacement (34A, 34B) étant avantageusement mobile par rapport au pont (24) entre une première configuration de pose, dans lequel l'axe de pose (C-C') est disposé en regard du pont (24), notamment enregard d'un puits central (26) ménagé dans la structure (10), et une deuxième configuration de pose dans lequel l'axe de pose (C-C') est situé à l'extérieur du pont (24).

15. Structure (10) selon la revendication 14, **caractérisé en ce qu'**elle porte une conduite (12), avantageusement une conduite flexible, engagée dans le ou dans chaque ensemble de saisie et de déplacement (34A, 34B).

16. Structure (10) selon la revendication 14 ou 15, **caractérisée en ce qu'**elle comporte une coque flottant sur l'étendue d'eau, le fût étant monté fixe en rotation dans la coque, par exemple par encastrement ou étant disposé dans un support fixé sur la coque pour retenir le fût et permettre son guidage en rotation autour de son axe.

17. Procédé de pose d'une conduite (12) dans une étendue d'eau (11), le procédé étant du type comprenant les étapes suivantes :
- disposition d'une structure (10) suivant la revendication 14 ou 15 à la surface de l'étendue d'eau (11) en regard d'une région de pose de la conduite (12);
- placement du ou de chaque ensemble de saisie et de déplacement (34A, 34B) de la conduite dans une configuration de pose ;
- engagement d'au moins un tronçon de la conduite (12) à poser dans le ou dans chaque ensemble de saisie et de déplacement (34A, 34B) ;
- déplacement vertical de la conduite (12) par l'ensemble de saisie et de déplacement (34A, 34B) pour déployer la conduite (12) dans l'étendue d'eau (11).

## Patentansprüche

1. Vorrichtung (18) zum Verlegen einer Leitung (12) in einer Wasserfläche (11), des Typs aufweisend:
- einen Turm (30), der dazu bestimmt ist entlang einer Turmachse (B-B') in einer Verlege-Schwimmstruktur (10) vorzustehen,
- wenigstens eine Einrichtung (34A, 34B) zum Ergreifen und zum Verlagern der Leitung (12), die dazu bestimmt ist, mit einer peripheren Fläche der Leitung (12) in Kontakt zu treten zum Führen der Verlagerung der Leitung (12) zu der Wasserfläche (11) hin entlang einer Verlege-Achse (C-C'), die im Wesentlichen parallel zu der Turmachse (B-B') ist, wobei die oder jede Einrichtung zum Ergreifen und zum Verlagern (34A, 34B) von dem Turm (30) getragen wird, **dadurch gekennzeichnet, dass** der Turm (30) von einem Säulenschaft (32) gebildet ist, der sich entlang der Turmachse (B-B') erstreckt, wobei die oder jede Einrichtung zum Ergreifen und zum Verlagern (34A, 34B) ausgehend von dem Säulenschaft (32) bezüglich der Turmachse (B-B') quer vorsteht, wobei der Säulenschaft (32) von einer rohrförmigen Wand (46) gebildet ist, die einen zentralen Hohlraum (48) begrenzt.

2. Vorrichtung (18) gemäß Anspruch 1, **dadurch gekennzeichnet, dass** der Säulenschaft (32) ein einziges Bein zur Fixierung in der Schwimmstruktur aufweist, wobei der Säulenschaft vorteilhafterweise eine im Wesentlichen komplette Außenfläche hat.

3. Vorrichtung (18) gemäß irgendeinem der vorhergehenden Ansprüche, **dadurch gekennzeichnet, dass** die oder jede Einrichtung zum Ergreifen und zum Verlagern (34A, 34B) um die Turmachse (B-B') herum winkelverlagerbar ist zwischen einer ersten Verlege-Konfiguration und einer zweiten Verlege-Konfiguration.

4. Vorrichtung (18) gemäß Anspruch 3, **dadurch gekennzeichnet, dass** die oder jede Einrichtung zum Ergreifen und zum Verlagern (34A, 34B) bezüglich des Säulenschafts (32) rotierbar montiert ist zum Verlagern der oder jeder Einrichtung zum Ergreifen und zum Verlagern (34A, 34B) zwischen deren ersten Verlege-Konfiguration und deren zweiten Verlege-Konfiguration.

5. Vorrichtung (18) gemäß Anspruch 3 oder 4, **dadurch gekennzeichnet, dass** sie aufweist einen Halter (240), der dazu bestimmt ist, an der Verlege-Schwimmstruktur (10) fixiert zu sein, wobei der Säulenschaft (32) in dem Halter (240) um die Turmachse (B-B') rotierbar montiert ist zum Verlagern der oder jeder Einrichtung zum Ergreifen und zum Verlagern (34A, 34B) zwischen deren ersten Verlege-Konfiguration und deren zweiten Verlege-Konfiguration.

6. Vorrichtung (18) gemäß irgendeinem der vorhergehenden Ansprüche, **dadurch gekennzeichnet, dass** sie aufweist eine Rinne zur Führung (112) der Leitung zu der oder jeder Einrichtung zum Ergreifen und zum Verlagern (34A, 34B) hin, wobei die Rinne zur Führung (112) von dem Turm (30) getragen wird indem sie vorteilhafterweise oberhalb der oder jeder Einrichtung zum Ergreifen und zum Verlagern (34A, 34B) angeordnet ist.

7. Vorrichtung (18) gemäß irgendeinem der vorhergehenden Ansprüche, **dadurch gekennzeichnet, dass** sie aufweist einen Apparat (38) zur individuellen Handhabung der oder jeder Einrichtung zum Ergreifen und zum Verlagern (34A, 34B), wobei der Apparat zur Handhabung (38) von dem Turm (30) getragen wird.

8. Vorrichtung (18) gemäß Anspruch 7, **dadurch gekennzeichnet, dass** der Apparat zur Handhabung (38) an einem oberen Ende des Säulenschafts (32) montiert ist.

9. Vorrichtung (18) gemäß irgendeinem der Ansprüche 7 oder 8, **dadurch gekennzeichnet, dass** der Apparat zur Handhabung (38) bezüglich des Säulenschafts (32) rotierbar montiert ist.

10. Vorrichtung (18) gemäß irgendeinem der Ansprüche 7 bis 9, **dadurch gekennzeichnet, dass** der Apparat zur Handhabung (38) eine Winde und ein von der Winde ausgehend ausgebbares Seil (137) aufweist, wobei das ausgebbare Seil (137) imstande ist, die Leitung (12) zu tragen.

11. Vorrichtung (18) gemäß irgendeinem der vorhergehenden Ansprüche, **dadurch gekennzeichnet, dass** die oder jede Einrichtung zum Ergreifen und zum Verlagern (34A, 34B) aufweist ein Gestell (70), das eine Passage für den Lauf (73) der Leitung entlang einer Verlege-Achse (C-C') parallel zu der Turm-Achse (B-B') definiert, und wenigstens einen Mechanismus zum Ergreifen einer peripheren Fläche der Leitung, wobei der Mechanismus zum Ergreifen von dem Gestell (70) getragen wird.

12. Vorrichtung (18) gemäß Anspruch 11, **dadurch gekennzeichnet, dass** das Gestell (70) verlagerbar ist zwischen einer Geschlossen-Konfiguration für das Verlegen und einer Geöffnet-Konfiguration für den Zugang zur Passage für den Lauf (73), wobei das Gestell (70) vorteilhafterweise zwei gegenüberliegende Haltestrukturen (74C, 74D) aufweist, wobei jede Haltestruktur (74C, 74D) einen Mechanismus zum Ergreifen trägt, der dazu bestimmt ist in Kontakt mit der Leitung zu treten, wobei wenigstens eine Haltestruktur (74C, 74D), vorteilhafterweise die beiden Haltestrukturen (74C, 74D), bezüglich des Säulenschafts (32) drehbar montiert sind zum Passieren-Lassen des Gestells (70) von seiner Geschlossen-Konfiguration in seine Geöffnet-Konfiguration.

13. Vorrichtung (18) gemäß irgendeinem der Ansprüche 11 oder 12, **dadurch gekennzeichnet, dass** der Mechanismus zum Ergreifen einen Ketten-Spanner (72) aufweist.

14. Verlege-Schwimmstruktur (10; 210), die dazu bestimmt ist zum Verlegen einer Leitung (12) in einer Wasserfläche (11), des Typs aufweisend:
- ein Deck (24),
- eine Vorrichtung zum Verlegen (18) gemäß irgendeinem der vorhergehenden Ansprüche, wobei die Vorrichtung zum Verlegen (18) an dem Deck (24) vorsteht,
wobei die oder jede Einrichtung zum Ergreifen und zum Verlagern (34A, 34B) vorteilhafterweise bezüglich des Decks (24) bewegbar ist zwischen einer ersten Verlege-Konfiguration, in welcher die Verlege-Achse (C-C') dem Deck (24) zugewandt, insbesondere einem zentralen Schacht (26), der in der Struktur (10) bereitgestellt ist, zugewandt, angeordnet ist, und einer zweiten Verlege-Konfiguration, in welcher die Verlege-Achse (C-C') außerhalb des Decks (24) angeordnet ist.

15. Struktur (10) gemäß Anspruch 14, **dadurch gekennzeichnet, dass** sie eine Leitung (12) trägt, vorteilhafterweise eine flexible Leitung, die im Eingriff ist mit der oder mit jeder Einrichtung zum Ergreifen oder zum Verlagern (34A, 34B).

16. Struktur (10) gemäß Anspruch 14 oder 15, **dadurch gekennzeichnet, dass** sie aufweist einen Schwimm-Körper auf der Wasserfläche, wobei der Säulenschaft in dem Körper drehfest montiert ist, zum Beispiel mittels Einbettens, oder in einem an dem Körper fixierten Halter angeordnet ist zum Rückhalten des Säulenschafts und zum Erlauben seiner Drehführung um seine Achse.

17. Verfahren zum Verlegen einer Leitung (12) in einer Wasserfläche (11), wobei das Verfahren vom Typ ist, der die folgenden Schritte aufweist:
- Anordnen einer Struktur (10) gemäß dem Anspruch 14 oder 15 an der Oberfläche der Wasserfläche (11) gegenüber einem Verlege-Bereich der Leitung (12),
- Platzieren der oder jeder Einrichtung zum Ergreifen und zum Verlagern (34A, 34B) der Leitung in einer Verlege-Konfiguration,
- In-Eingriff-Bringen wenigstens eines Abschnitts der zu verlegenden Leitung (12) in der oder in jeder Einrichtung zum Ergreifen und zum Verlagern (34A, 34B),
- vertikales Verlagern der Leitung (12) mittels der Einrichtung zum Ergreifen und zum Verlagern (34A, 34B) zum Ausgeben der Leitung (12) in die Wasserfläche (11).

## Claims

1. A device (18) for laying a pipe (12) in an expanse of water (11), of the type comprising:
- a tower (30) intended to protrude along a tower axis (B-B') in a floating laying structure (10);
- at least one assembly (34A, 34B) for gripping and moving the pipe (12) intended to come into contact with a peripheral surface of the pipe (12) in order to guide the displacement of the pipe (12) towards the expanse of water (11) along a laying axis (C-C') substantially parallel to the tower axis (B-B'), said or each gripping and moving assembly (34A, 34B) being borne by the tower (30); **characterized in that** the tower (30) is formed by a barrel (32) extending along the tower axis (B-B'), said or each gripping and moving assembly (34A, 34B) transversally protruding from the barrel (32) relatively to the tower axis (B-B'), the barrel (32) being formed by a tubular wall (46) delimiting a hollow central space (48).

2. The device (18) according to claim 1, **characterized in that** the barrel (32) includes a single attachment leg in the floating structure, the barrel advantageously having a substantially solid peripheral surface.

3. The device (18) according to any of the preceding claims, **characterized in that** said or each gripping and moving assembly (34A, 34B) is angularly displaceable around the tower axis (B-B') between a first laying configuration and a second laying configuration.

4. The device (18) according to claim 3, **characterized in that** said or each gripping and moving assembly (34A, 34B) is rotatably mounted relatively to the barrel (32) in order to displace said or each gripping and moving assembly (34A, 34B) between its first laying configuration and its second laying configuration.

5. The device (18) according to claim 3 or 4, **characterized in that** it includes a support (240) intended to be attached on the floating laying structure (10), the barrel (32) being rotatably mounted in the support (240) around the tower axis (B-B') in order to move said or each gripping and moving assembly (34A, 34B) between its first laying configuration and its second laying configuration.

6. The device (18) according to any of the preceding claims, **characterized in that** it includes a chute (112) for guiding the pipe towards said or each gripping and moving assembly (34A, 34B), the guiding chute (112) being borne by the tower (30), while being advantageously positioned above said or each gripping and moving assembly (34A, 34B).

7. The device (18) according to any of the preceding claims, **characterized in that** it includes a distinct handling device (38) of said or each gripping and moving assembly (34A, 34B), the handling device (38) being borne by the tower (30).

8. The device (18) according to claim 7, **characterized in that** the handling device (38) is mounted at an upper end of the barrel (32).

9. The device (18) according to any of claims 7 or 8, **characterized in that** the handling device (38) is rotatably mounted relatively to the barrel (32).

10. The device (18) according to any of claims 7 to 9, **characterized in that** the handling device (38) comprises a winch and a line (137) deployable from the winch, the deployable line (137) being able to bear the pipe (12).

11. The device (18) according to any of the preceding claims, **characterized in that** said or each gripping and moving assembly (34A, 34B) includes a chassis (70) defining a passage for circulation (73) of the pipe along a laying axis (C-C') parallel to the tower axis (B-B'), and at least one mechanism for gripping a peripheral surface of the pipe, the gripping mechanism being borne by the chassis (70).

12. The device (18) according to claim 11, **characterized in that** the chassis (70) is displaceable between a closed laying configuration and an open configuration for accessing the circulation passage (73), the chassis (70) advantageously comprising two opposite supporting structures (74C, 74D), each supporting structure (74C, 74D) bearing a gripping mechanism intended to come into contact with the pipe, at least one supporting structure (74C, 74D), advantageously both supporting structures (74C, 74D), being rotatably mounted relatively to the barrel (32) in order to have the chassis (70) pass from its closed configuration to its open configuration.

13. The device (18) according to any of claims 11 or 12, **characterized in that** the gripping mechanism comprises a tensioner with caterpillar-type tracks (72).

14. A floating laying structure (10; 210), intended for laying a pipe (12) in an expanse of water (11), of the type comprising:
- a deck (24);
- a laying device (18) according to any of the preceding claims, the laying device (18) protruding on the deck (24),
said or each gripping and moving assembly (34A, 34B) being advantageously moveable relatively to the deck (24) between a first laying configuration, in which the laying axis (C-C') is placed facing the deck (24), notably facing a central well (26) made in the structure (10), and a second laying configuration in which the laying axis (C-C') is located outside the deck (24).

15. The structure (10) according to claim 14, **characterized in that** it bears a pipe (12), advantageously a flexible pipe, engaged into said or each gripping and moving assembly (34A, 34B).

16. The structure (10) according to claim 14 or 15, **characterized in that** it includes a hull floating on the expanse of water, the barrel being fixedly mounted in rotation in the hull, for example by fitting it in or by being placed on a support attached on the hull in order to retain the barrel and allow its guiding in rotation around its axis.

17. A method for laying a pipe (12) in an expanse of water (11), the method being of the type comprising the following steps:
- positioning a structure (10) according to claim 14 or 15 at the surface of the expanse of water (11) facing a region for laying the pipe (12);
- placing said or each assembly for gripping and moving (34A, 34B) the pipe in a laying configuration;
- engaging at least one section of the pipe (12) to be laid into said or each gripping and moving assembly (34A, 34B);
- vertically displacing the pipe (12) with the gripping and moving assembly (34A, 34B) in order to deploy the pipe (12) in the expanse of water (11).
